# FASCICULE DE BREVET EUROPEEN

(11) **EP 0 654 607 B1**
(45) Date de publication et mention de la délivrance du brevet: **20.05.1998**
(21) Numéro de dépôt: 94402680.6
(22) Date de dépôt: 23.11.1994
(51) Int. Cl.: F04D 29/12, F16J 15/34, F04D 3/02

(54) **Boîte d'étanchéité perfectionnée pour pompe et son application notamment à une pompe alimentaire de centrale électrique**
Abdichtungskasten für Pumpen und seine Verwendung in einer Kraftwerksförderpumpe
Sealing box for pumps and its application to power station feed pumps

(30) Priorité: 24.11.1993 FR 9314069
(43) Date de publication de la demande: 24.05.1995
(73) Titulaire: LATTY INTERNATIONAL S.A., F-91400 Orsay (FR)
(72) Inventeur: Latty, Cyril Xavier, F-92210 Saint-Cloud (FR); Gueret, Gérard, F-28160 Yevres (FR); Morel, Gérard, F-78360 Montesson (FR); Buchdahl, Denis, F-78160 Marly-Le-Roi (FR); Mech, Christian, F-95290 L'Isle-Adam (FR); Blanc, Michel, F-92240 Malakoff (FR)
(74) Mandataire: Polus, Camille

(56) Documents cités:
- DE-A- 3 804 183
- FR-A- 965 032
- FR-A- 2 105 902
- FR-A- 2 192 676
- FR-A- 2 607 874

## Description

La présente invention concerne le domaine technique des pompes à liquide notamment à haute température et sous forte pression et, plus particulièrement, les boîtes d'étanchéité pour de telles pompes.

Dans de nombreux secteurs industriels il est nécessaire de véhiculer des liquides portés à une haute température et sous une forte pression dans des canalisations et conduites à l'aide de pompes faites essentiellement d'un corps et d'un arbre tournant le traversant et entraînant un aubage ou similaire. L'étanchéité entre le corps et l'arbre est habituellement faite à l'aide de boîtes d'étanchéité amovibles qui sont maintenues sur le corps de la pompe, sur les deux faces de celui-ci d'où sort l'arbre.

Ce type de situation se rencontre par exemple sur les groupes turbo-alternateurs d'une centrale électrique thermique quelle soit classique ou nucléaire. En effet, il est nécessaire de faire circuler l'eau du circuit qui fait tourner la turbine, qui est déminéralisée et dégazée et qui est portée à une température qui avoisine 180°C sous une pression de l'ordre de 2,7 MPa (bars). Cette eau dite alimentaire, est celle qui est échauffée par exemple par l'intermédiaire d'un fluide caloporteur qui est porté à haute température dans le coeur d'un réacteur nucléaire.

Les pompes de ce type sont munies habituellement de deux boîtes d'étanchéité montées en opposition et le plus souvent symétriquement, qui sont équipées chacune d'une garniture mécanique d'étanchéité faite essentiellement de deux bagues ou grains dont l'une est maintenue fixe et dont l'autre tourne avec l'arbre et qui sont appliquées en pression l'une contre l'autre suivant des surfaces de frottement planes perpendiculaires à l'axe de rotation et soigneusement rodées. On comprend qu'en fonctionnement, ces bagues du fait notamment de leur frottement mutuel s'échauffent et qu'il est nécessaire d'évacuer les calories engendrées de manière à éviter leur endommagement ou leur destruction et, de la sorte empêcher les fuites qui immanquablement prendraient naissance.

Pour éviter les élévations anormales de température de ces garnitures, on utilise classiquement un circuit de refroidissement autonome associé localement aux boîtes d'étanchéité où circule habituellement de l'eau à relativement basse température et sous faible pression, comparées à celles de l'eau alimentaire par exemple.

Les circuits de refroidissement autonomes de cette nature comprennent, le plus souvent, un dispositif de pompage de circulation incorporé et, s'il y a lieu, un système de réfrigérant intégré qui sert à la fois de barrière thermique et de réfrigérant de la garniture mécanique en utilisant une partie de l'eau alimentaire dont la température a été notablement abaissée au-dessous de 100°C.

Des exemples de solutions de boîtes d'étanchéité à dispositif de pompage de circulation incorporé et à réfrigérant intégré sont exposés dans les documents FR 2 192 676 et FR 2 607 874 auxquels on pourra se reporter utilement pour plus ample information.

Si les solutions décrites par ces documents donnent relativement satisfaction, elles ne sont pas sans présenter d'inconvénients. En effet, les dispositifs de pompage de circulation incorporés sont souvent du type à vis l'une mâle et l'autre femelle qui tournent en vis-à-vis relativement et à distance l'une de l'autre avec un interstice radial réduit de l'ordre de 0,5 mm qu'il faut maintenir pratiquement constant.

On comprend que la taille de telles vis et le choix des matériaux pour faire en sorte que l'efficacité du dispositif de pompage de circulation incorporé conserve ses performances quelles que soient les variations de température et les variations de vitesse de rotation soulèvent de sérieux problèmes.

Ces difficultés techniques ne sont pas sans incidence économique puisque toute défaillance de l'étanchéité provoque une perte d'exploitation que l'on peut évaluer de l'ordre de 30% de la puissance d'un groupe turbo-alternateur considéré tout en gardant à l'esprit que le groupe risque d'être gravement endommagé pour le cas où les paliers seraient noyés par l'eau de la fuite. De plus, si la température des garnitures s'éloigne de la plage qui leur est assignée, le gradient thermique qui apparaît au niveau des surfaces de frottement accélère un phénomène dit de corrosion sélective même lorsqu'on utilise des matériaux à haute performance à base de carbone au liant antimoine ou des carbures de silicium. Ceci contribue à gréver notablement les coûts de surveillance et d'entretien.

Le but de l'invention est de remédier à ce type d'inconvénients en évacuant la chaleur produite par le frottement mutuel des garnitures ainsi que celui résultant des effets tourbillonnaires du liquide qui entoure la garniture pour son refroidissement.

L'invention a pour objet une boîte d'étanchéité notamment pour pompe à liquide à haute température et sous forte pression faite d'un corps et d'un arbre tournant le traversant et entraînant un aubage, et qui comprend une garniture mécanique d'étanchéité, un circuit de refroidissement, un système de réfrigérant intégré et un dispositif de pompage de circulation incorporé pour le circuit de refroidissement. Elle comprend un élément mâle entraîneur qui est destiné à être rendu solidaire en rotation de l'arbre tournant selon un axe et, entourant au moins partiellement cet élément mâle un élément femelle diffuseur qui est destiné à être assujetti au corps. Cette boîte d'étanchéité est remarquable en ce que l'élément (51) mâle entraîneur présente une paroi extérieure cylindrique continue et l'élément (52) femelle diffuseur présente une paroi intérieure cylindrique portant localement à sa surface une couronne de nervures saillantes qui présentent une direction générale non orthogonale à l'axe et qui délimitent avec la paroi extérieure de l'élément mâle un interstice de valeur radiale déterminée.

D'autres caractéristiques de l'invention apparaîtront à la lecture de la description et des revendications qui suivent ainsi qu'à l'examen du dessin annexé, donné seulement à titre d'exemple, où :

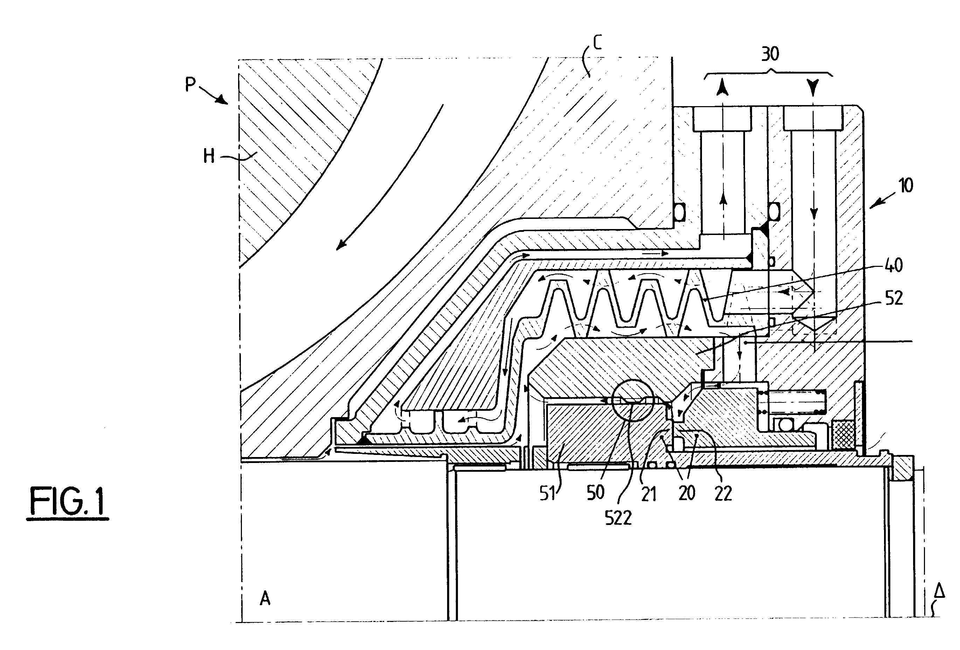

- la Figure 1 est une demi-coupe méridienne axiale schématique d'une partie d'un mode de réalisation d'une boîte d'étanchéité selon l'invention; et

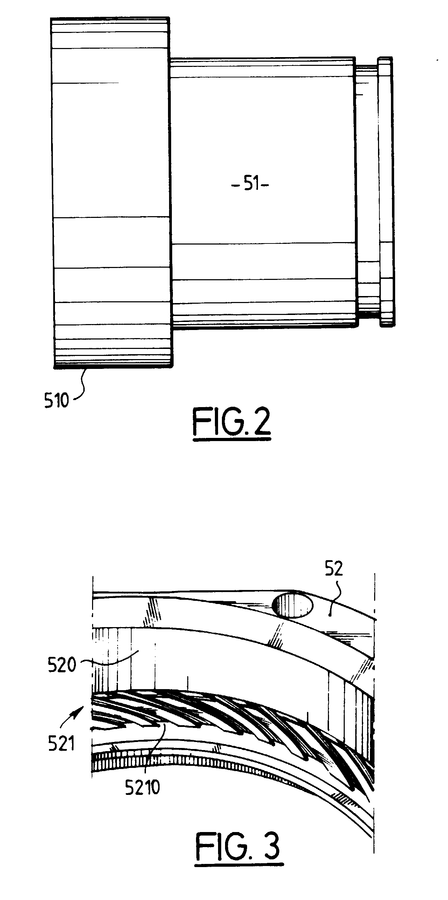

- les Figures 2 et 3 sont des vues de détail de constituants de la boîte illustrée sur la Figure 1 selon l'invention.

Les boîtes d'étanchéité notamment pour pompe à liquide à haute température et sous forte pression du type habituellement utilisées par exemple dans les groupes turboalternateurs des centrales thermiques et en particulier des centrales nucléaires étant bien connues dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté. En particulier, il pourra se reporter utilement aux deux documents précités pour plus amples informations.

Dans ce qui suit, on utilise toujours un même numéro de référence pour identifier un élément homologue, quel que soit son mode de réalisation ou sa variante de réalisation.

Pour la commodité de l'exposé, on décrira successivement chacun des constituants d'un mode de réalisation d'une boîte d'étanchéité pour pompe à liquide selon l'invention avant d'en exposer la fabrication au besoin, et le fonctionnement.

Une boîte d'étanchéité 10 selon l'invention comprend, essentiellement, une garniture mécanique 20, un circuit de refroidissement 30, un système de réfrigérant intégré 40 et un dispositif de pompage de circulation incorporé 50.

Une telle boîte d'étanchéité 10 est de préférence destinée à équiper une pompe P à liquide par exemple à eau portée à haute température et sous forte pression placée habituellement sur le circuit d'eau alimentaire de la turbine d'un groupe turboalternateur. Une telle pompe P est habituellement essentiellement faite d'un corps C ou stator et d'un arbre A tournant selon un axe Δ le traversant et entraînant un aubage H. Tout ceci est classique et on ne s'y étendra pas davantage. Une telle pompe est habituellement équipée de deux boîtes d'étanchéité placées en opposition et symétriquement de part et d'autre des deux sorties de l'arbre.

La garniture 20 est habituellement faite de deux bagues ou grains dont l'un 21 tourne avec l'arbre et dont l'autre 22 est maintenu fixe et rendu solidaire du corps. Ces garnitures en forme d'anneau présentent deux faces qui sont appliquées l'une contre l'autre à l'aide de moyens élastiques tels des ressorts. Ces faces finement rodées et/ou glacées sont planes et perpendiculaires à l'axe Δ de rotation de l'arbre.

Le circuit de refroidissement 30 est à relativement basse température et faible pression comparées respectivement à celles auxquelles est soumis le liquide ou eau alimentaire. C'est ce circuit de refroidissement qui contribue au maintien de la température de fonctionnement de la garniture dans la plage assurant un bon fonctionnement en conservant l'étanchéité.

Le système de réfrigérant intégré ou de réfrigération incorporé 40 sert à la fois de barrière thermique et d'échangeur de chaleur grâce à un circuit de balayage qui utilise une partie du liquide ou eau alimentaire dont la température a été notablement abaissée. Ce système est de préférence du type de celui qui est clairement exposé dans le document FR 2 607 874.

Le dispositif de pompage de circulation incorporé 50 comprend, essentiellement, un élément 51 mâle et un élément femelle 52 entourant au moins partiellement l'élément mâle. L'élément mâle 51 dit entraîneur est destiné à être rendu solidaire en rotation de l'arbre par toute technique classique courante appropriée. Cet élément mâle 51 en forme de manchon ou similaire présente une paroi 510 extérieure cylindrique continue. Cette paroi cylindrique est lisse voire rugueuse. L'élément femelle 52 dit diffuseur est destiné à être assujetti au corps par toute technique classique courante appropriée de manière à demeurer fixe en rotation. Cet élément femelle 52 en forme de fourreau ou similaire présente une paroi intérieure cylindrique 520 portant localement à sa surface une couronne de nervures 521 saillantes. Ces nervures présentent une direction générale non orthogonale à l'axe Δ et délimitent avec la paroi extérieure 510 de l'élément mâle 51 un interstice 522 de valeur radiale déterminée notamment compris entre 0,3 et 1,5 mm environ, et de préférence de l'ordre de 0,8 mm. Les nervures 521 se présentent à la manière de dents par exemple hélicoïdales courbes ou droites dont le profil est par exemple carré ou rectangulaire à arêtes vives ou arrondies ou bien trapézoïdal voire en parallélélogramme. Elles se présentent par exemple à la manière de filets multiples de pas à droite ou à gauche. La largeur des dents est s'il y a lieu différente de l'intervalle qui les sépare. De préférence, la largeur des dents est moindre que l'intervalle 5210 qui les sépare. On observera que l'étendue axiale de la couronne de nervures saillantes 521 est nettement plus courte que la longueur de la paroi intérieure 520 de l'élément femelle 52 et est, par exemple, de l'ordre du dixième environ de cette longueur.

Les bagues ou grains de la garniture sont distincts ou d'un seul tenant avec le manchon ou fourreau correspondant du dispositif de pompage.

Les constituants d'une boîte d'étanchéité selon l'invention sont faits dans des matériaux habituellement utilisés qui sont mis en forme et travaillés selon des techniques classiques appropriées à la nature des matériaux utilisés, telles que par exemple le tournage, la rectification, le rodage, le glaçage, le fraisage, le taillage, l'électroérosion, etc, ...

Tous les constituants d'une boîte d'étanchéité selon l'invention sont réunis, assemblés et montés comme cela ressort clairement de l'examen des figures du dessin.

Le fonctionnement d'une boîte d'étanchéité selon l'invention est le suivant.

D'une manière tout à fait surprenante et inattendue, bien qu'on n'utilise pas un liquide visqueux au sens physique habituel de ce terme, et qu'on utilise de l'eau dont la viscosité décroît avec la température, et qu'on choisisse un interstice relativement important, on constate que le liquide du circuit de refroidissement est entraîné du fait de son contact avec la paroi extérieure cylindrique continue de l'élément mâle et est soumis à une accélération centrifuge qui engendre une pression qui le projette dans la multitude de canaux délimités par les nervures dont la direction générale n'est pas orthogonale à l'axe. Le profil, la section, l'écartement et l'angle de la direction des nervures ainsi que l'intervalle qu'elles ménagent entre elles de même que leur sens par rapport au sens de rotation de l'arbre font que le liquide présente une pression résiduelle à la sortie du dispositif de pompage.

Le choix judicieux de ces paramètres ainsi que du nombre des nervures permet d'adapter le débit et la différence de pression entre l'entrée et la sortie du dispositif de pompage.

Pour un mode de réalisation on se sert d'un élément mâle en manchon dont le diamètre de la paroi extérieure cylindrique est de 205 mm environ et d'un élément femelle en fourreau dont le diamètre de la paroi intérieure cylindrique est de l'ordre de 211 mm environ portant des dents hélicoïdales inclinées à 20° de hauteur 2 mm, de largeur 2,00 mm et d'intervalle 4,00 mm ménageant un interstice de 0,8 mm. L'étendue axiale de la couronne de dents est de 6 mm environ et la longueur de la paroi intérieure de l'élément femelle de 60 mm. Lorsque l'élément mâle tourne à une vitesse comprise entre 500 et 4500 tr/min environ, l'échauffement de l'eau de réfrigération varie entre 3 et 10°C et la différence de pression entrée-sortie de l'eau évolue pour atteindre 0,11 MPa (1,1 bar) environ.

On voit donc que grâce à l'invention, on réduit notablement les coûts de fabrication puisque l'élément mâle est essentiellement cylindrique et que l'interstice entre élément mâle et nervures est notablement augmenté.

Grâce à l'invention l'énergie dissipée est minimale, on obtient une bonne circulation dans le circuit de balayage du système de réfrigérant intégré et on ne voit pas apparaître d'instabilité vibratoire.

De plus, en matière de sécurité des personnels, si une fuite se produisait l'eau qui pourrait en jaillir serait à une température abaissée de l'ordre de 60°C.

L'invention convient particulièrement bien à titre d'exemple aux installations faisant appel à des motopompes ou à des turbopompes du type de celles utilisées à bords de bâtiments marins à propulsion nucléaire de surface ou sous-marins ou du type de celles utilisées dans les centrales thermiques classiques ou nucléaires de production d'électricité.

Ce qui précède met bien en lumière les particularités distinctives de l'invention, l'intérêt qu'elle offre et l'avantage qu'elle procure.

## Revendications

1. Boîte d'étanchéité notamment pour pompe à liquide à haute température et sous forte pression faite d'un corps et d'un arbre tournant le traversant et entraînant un aubage, qui comprend une garniture mécanique d'étanchéité, un circuit de refroidissement, un système de réfrigérant intégré et un dispositif de pompage de circulation incorporé pour ce circuit de refroidissement et qui comprend un élément (51) mâle entraîneur qui est destiné à être rendu solidaire en rotation de l'arbre selon un axe (Δ) et, entourant au moins partiellement cet élément mâle (51) un élément (52) femelle diffuseur qui est destiné à être assujetti au corps, caractérisée en ce que l'élément (51) mâle entraîneur présente une paroi (510) extérieure cylindrique continue et l'élément (52) femelle diffuseur présente une paroi (520) intérieure cylindrique portant localement à sa surface une couronne de nervures (521) saillantes qui présentent une direction générale non orthogonale à l'axe (Δ) et qui délimitent avec la paroi extérieure (510) de l'élément mâle (51) un interstice (522) de valeur radiale déterminée.

2. Boîte selon la revendication 1, caractérisée en ce que la paroi extérieure (510) de l'élément mâle (51) est lisse.

3. Boîte selon la revendication 1, caractérisée en ce que la paroi extérieure (510) de l'élément mâle (51) est rugueuse.

4. Boîte selon l'une quelconque des revendications 1 à 3, caractérisée en ce que les nervures saillantes (521) sont des dents hélicoïdales.

5. Boîte selon la revendication 4, caractérisée en ce que la largeur des dents est différente de l'intervalle (5210) qui les sépare.

6. Boîte selon l'une quelconque des revendications 1 à 5, caractérisée en ce que l'interstice (522) est notamment compris entre 0,5 et 1,3 mm environ.

7. Boîte selon l'une quelconque des revendications 1 à 6, caractérisée en ce que l'étendue axiale de la couronne de nervures saillantes (521) est de l'ordre du dixième environ de la longueur de la paroi intérieure (520) de l'élément femelle (52).

8. Application d'une boîte selon l'une quelconque des revendications 1 à 7 à une pompe alimentaire notamment d'un groupe turbo-alternateur d'une centrale électrique thermique classique voire nucléaire.

## Patentansprüche

1. Abdichtungskasten, insbesondere für Hochtemperatur- und Hochdruck-Flüssigkeitspumpen mit einem Körper und einer diesen durchsetzenden und ein Schaufelsystem antreibenden Welle, der eine mechanische Dichtungspackung, einen Kühlkreislauf, ein integriertes Kühlmittelsystem und eine eingebaute Umwälzpumpeinrichtung für den Kühlkreislauf aufweist, mit einem als Läufer dienenden Kernelement (51), das dazu bestimmt ist, mit der Welle um eine Achse (Δ) mitdrehbar verbunden zu werden, und einem als Diffusor dienenden Buchsenelement (52), das das Kernelement (51) zumindest teilweise umgibt und dazu bestimmt ist, an dem Körper angebracht zu werden, dadurch gekennzeichnet, daß das Läufer-Kernelement (51) eine kontinuierliche zylindrische Außenwand (510) aufweist und das Diffusor-Buchsenelement (52) eine zylindrische Innenwand (520) aufweist, die an ihrer Oberfläche lokal einen Kranz von vorspringenden Rippen (521) trägt, die eine zu der Achse (A) nicht orthogonale allgemeine Richtung haben und mit der Außenwand (510) des Kernelements (51) einen Zwischenraum (522) mit bestimmtem Radialmaß bilden.

2. Kasten nach Anspruch 1, dadurch gekennzeichnet, daß die Außenwand (510) des Kernelements glatt ist.

3. Kasten nach Anspruch 1, dadurch gekennzeichnet, daß die Außenwand (510) des Kernelements (51) rauh ist.

4. Kasten nach einem der Ansprüche 1 bis 3, dadurch gekennzeichnet, daß die vorspringenden Rippen (521) schraubenförmige Zähne sind.

5. Kasten nach Anspruch 4, dadurch gekennzeichnet, daß die Breite der Zähne verschieden von dem sie trennenden Intervall (5210) ist.

6. Kasten nach einem der Ansprüche 1 bis 5, dadurch gekennzeichnet, daß der Zwischenraum (522) insbesondere zwischen etwa 0,5 und 1.3 mm beträgt.

7. Kasten nach einem der Ansprüche 1 bis 6, dadurch gekennzeichnet, daß die axiale Ausdehnung des Kranzes der vorspringenden Rippen (521) in der Größenordnung von etwa einem Zehntel der Länge der Innenwand (520) des Buchsenelements (52) liegt.

8. Anwendung eines Kastens nach einem der Ansprüche 1 bis 7 in einer Förderpumpe, insbesondere einer Turbinengeneratorgruppe eines konventionellen Wärmekraftwerks oder eines Kernkraftwerks.

## Claims

1. Sealing box, more particularly one for a pump which delivers liquid at high temperature and at high pressure and which is made from a body and a rotating shaft which passes through said body and drives turbine blades, comprising a mechanical gland, a cooling circuit, an integrated cooling system and a circulation pumping device incorporated in respect of said cooling circuit and comprising a male carrier element (51) which is designed to be rigidly joined in rotation to the shaft along an axis (D) and, at least partially surrounding said male element (51), a female diffuser element (52) which is designed to be made fast with the body, characterised in that the male carrier element (51) features a continuous cylindrial external wall (510) and the female diffuser element (52) features a cylindrical internal wall (520) bearing locally on its surface a ring of projecting ribs (521) which lie in a non-orthogonal general direction to the axis (D) and which with the external wall (510) of the male element (51) delimit a clearance (522) of a given radial value.

2. Box according to claim 1, characterised in that the external wall (510) of the male element (51) is smooth.

3. Box according to claim 1, characterised in that the external wall (510) of the male element (51) is rough.

4. Box according to any of claims 1 to 3, characterised in that the projecting ribs (521) are helicoid teeth.

5. Box according to claim 4, characterised in that the width of the teeth is different from the interval (5210) which separates them.

6. Box according to any of claims 1 to 5, characterised in that the clearance (522) is more particularly comprised between approximately 0.5 and 1.3 mm.

7. Box according to any of claims 1 to 6, characterised in that the axial span of the ring of projecting ribs (521) is in the order of approximately one-tenth of the length of the internal wall (510) of the female element (52).

8. Use of a box according to any of claims 1 to 7 with a feed pump, more particularly one belonging to an a.c. turbo-generator of a conventional thermal electric or even nuclear power station.
